# EUROPÄISCHE PATENTSCHRIFT

(11) **EP 3 473 490 B1**
(45) Veröffentlichungstag und Bekanntmachung des Hinweises auf die Patenterteilung: **16.12.2020**
(21) Anmeldenummer: 18186304.4
(22) Anmeldetag: 30.07.2018
(51) Int. Cl.: B60L 58/12

(54) **VERFAHREN ZUM BETRIEB EINES KRAFTFAHRZEUGS UND KRAFTFAHRZEUG**
MOTOR VEHICLE AND METHOD FOR OPERATING A MOTOR VEHICLE
PROCÉDÉ DE FONCTIONNEMENT D'UN VÉHICULE AUTOMOBILE ET VÉHICULE AUTOMOBILE

(30) Priorität: 23.10.2017 DE 102017218854
(43) Veröffentlichungstag der Anmeldung: 24.04.2019
(73) Patentinhaber: AUDI AG, 85045 Ingolstadt (DE)
(72) Erfinder: Morgenroth, Patrick, 72458 Albstadt (DE)

(56) Entgegenhaltungen:
- EP-A1- 2 894 436
- EP-A2- 2 447 107
- WO-A1-2011/069170
- DE-A1-102012 214 750
- DE-A1-102013 206 903
- DE-A1-102015 205 811
- US-A1- 2012 193 153
- US-A1- 2012 193 154
- US-A1- 2012 203 409
- US-A1- 2013 020 993
- US-A1- 2014 188 318
- US-A1- 2016 311 357
- US-A1- 2017 151 884

## Beschreibung

Die Erfindung betrifft ein Verfahren zum Betrieb eines Kraftfahrzeugs, wobei das Kraftfahrzeug einen elektrischen Traktionsmotor und eine Traktionsbatterie umfasst. Weiterhin betrifft die Erfindung ein Kraftfahrzeug.

Kraftfahrzeuge, welche einen elektrischen Traktionsmotor und eine Traktionsbatterie zur Speicherung der zum Betrieb des Traktionsmotors nötigen elektrischen Energie aufweisen, haben eine Reichweichte, welche von dem Energieverbrauch im Betrieb sowie von der in der Traktionsbatterie gespeicherten Energie abhängt. Eine Reichweitenvoraussage kann dabei mithilfe von Rechenalgorithmen prognostiziert werden, wobei aus Parametern des bisherigen Energieverbrauchs und des Ladezustandes der Traktionsbatterie die noch zur Verfügung stehende Reichweite, also die mit der zur Verfügung stehenden Energie noch zurücklegbare Strecke, bestimmt wird. Wenn sich nun der Energieverbrauch des Kraftfahrzeuges während der Fahrt ändert, so ändert sich auch die Reichweite des Kraftfahrzeugs entsprechend. Wenn in der Traktionsbatterie keine elektrische Energie mehr gespeichert ist, so ist das Kraftfahrzeug liegengeblieben und kann nicht weiter bewegt werden. In diesem Fall ist es erforderlich, die Traktionsbatterie wieder aufzuladen, um das Fahrzeug zu einem bis dahin gegebenenfalls noch nicht erreichten Ziel zu bewegen. Aus dem Stand der Technik sind verschiedene Verfahren zum Laden von Elektrofahrzeugen bekannt.

In DE 10 2011 013 453 A1 wird ein Energieverteilnetz für mit Akkus versehene Elektroautos beschrieben. Dabei wird ein erstes Elektroauto über ein Ladekabel mit einer Ladestation verbunden, wobei weitere Elektroautos baumartig miteinander über weitere Ladekabel untereinander sowie über das erste Elektroauto auch mit der Ladestation verbunden sind. Die derart miteinander verbundenen Elektroautos können auf diese Weise sowohl als Energiesenke als auch als Energiequelle dienen. Optional ist es dabei auch möglich, dass eine Übertragung von Energie auch zwischen zwei Fahrzeugen ohne Beteiligung der Ladestation stattfindet. Alle an diesem Verfahren beteiligten Elektroautos weisen weiterhin eine eindeutige Identitätskennzeichnung auf, um eine Abrechnung der übertragenen Energiemengen zu ermöglichen.

DE 10 2015 214 901 A1 offenbart eine Überbrückungsvorrichtung zur Übertragung elektrischer Energie zwischen zwei Fahrzeugen. Die Überbrückungsvorrichtung weist dazu eine erste und eine zweite Anschlussseite sowie ein Verbindungsmodul auf. Das Verbindungsmodul weist weiterhin eine Funkschnittstelle auf, welche dazu eingerichtet ist, ein Funksignal abzugeben, welches die zwischen zwei an den jeweiligen Anschlussseiten angeschlossenen Fahrzeugen übertragene Energie und/oder den Zustand zumindest einer Batterie eines der beiden Fahrzeuge wiedergibt. Über die Überbrückungsvorrichtung ist es möglich, elektrische Energie von einem Bordnetz oder einer Batterie eines Fahrzeugs an das Bordnetz oder an die Batterie eines weiteren Fahrzeuges zu übertragen.

In DE 10 2009 028 565 A1 wird eine Vorrichtung zum Laden elektrisch angetriebener Fahrzeuge offenbart. Die in ein Fahrzeug integrierte Vorrichtung weist dabei eine mit der Fahrzeugbatterie elektrisch verbundene Leistungsübertragungseinheit auf, welche zum drahtlosen Transport elektrischer Energie zu einer weiteren Leistungsübertragungseinheit eines weiteren Kraftfahrzeugs ausgebildet ist. Durch den drahtlosen Transport von elektrischer Energie von einem Fahrzeug zu einem weiteren Fahrzeug kann die Batterie des weiteren Fahrzeugs geladen werden.

Der Erfindung liegt daher die Aufgabe zugrunde, ein verbessertes Verfahren zum Betrieb eines Kraftfahrzeuges anzugeben.

Zur Lösung dieser Aufgabe ist erfindungsgemäß vorgesehen, dass mittels einer Kommunikationseinrichtung des Kraftfahrzeugs bei Vorliegen eines Entladungszustands über eine Datenkommunikationsverbindung eine Ladeinformation an wenigstens eine fahrzeugexterne Datenempfangseinrichtung übermittelt wird, wobei ein Entladungszustand vorliegt, wenn ein Ladestand der in der Traktionsbatterie gespeicherten elektrischen Energie nicht ausreichend ist, um den Traktionsmotor zu betreiben und/oder wenn ein Ladestand der in der Traktionsbatterie gespeicherten elektrischen Energie nicht ausreichend ist, um die zur Position des Kraftfahrzeugs nächstliegende Ladestation zu erreichen.

Der Vorteil der erfindungsgemäßen Lösung besteht darin, dass über die Kommunikationseinrichtung in das Kraftfahrzeug eine Ladeinformation an wenigstens eine fahrzeugexterne Datenempfangseinrichtung übermittelt wird, welche auf den Entladungszustand des Kraftfahrzeugs aufmerksam machen kann. Das Vorliegen des Entladungszustands bedeutet, dass der Ladestand der in der Traktionsbatterie gespeicherten elektrischen Energie nicht ausreichend ist, um die nächstgelegene Ladestation zu erreichen und/oder dass der Ladestand nicht mehr ausreichend ist, um den Traktionsmotor zu betreiben. Das Übermitteln der einen solchen Entladungszustand anzeigenden Ladeinformation erfolgt also, wenn das Kraftfahrzeug aufgrund des Mangels an Energie liegen geblieben ist und nicht mehr betrieben werden kann und/oder wenn absehbar ist, dass mit der noch in der Traktionsbatterie vorhandenen elektrischen Energie die nächstliegende Ladestation nicht mehr zu erreichen ist.

Die nächstliegende Ladestation bezeichnet in diesem Zusammenhang eine Ladestation, deren Position von der Position des Kraftfahrzeuges aus über die kürzeste zu fahrende Strecke zu erreichen ist. Diese kann beispielsweise durch eine Navigationseinrichtung des Kraftfahrzeugs, in der die Positionen von Ladesäulen hinterlegt sind, ermittelt werden. Ob die nächstliegende Ladestation noch zu erreichen ist, kann von der Navigationseinrichtung beispielsweise durch einen Vergleich der erforderlichen Strecke mit einer aufgrund von Parametern des bisherigen Energieverbrauchs und des Ladestands der Traktionsbatterie prognostizierten Reichweiteninformation ermittelt werden.

Für die Ladeinformation kann erfindungsgemäß vorgesehen sein, dass sie die Positionsdaten des Kraftfahrzeugs umfasst. Die Ladeinformation enthält somit zusätzlich zu der Information auf das Vorliegen eines Entladungszustandes des Kraftfahrzeugs die Positionsdaten des entladenen Kraftfahrzeugs. Der fahrzeugexternen Datenempfangseinrichtung wird somit mitgeteilt, wo sich das Kraftfahrzeug aktuell befindet. Bei der fahrzeugexternen Datenempfangseinrichtung kann es sich zum Beispiel um einen ortsfesten Computer oder einen Server handeln oder es kann an eine fahrzeugexterne Datenempfangseinrichtung übermittelt werden, welche Teil eines anderen Kraftfahrzeugs ist.

In einer bevorzugten Ausgestaltung der Erfindung kann vorgesehen sein, dass als fahrzeugexterne Datenkommunikationseinrichtung wenigstens eine Navigationseinrichtung eines weiteren Kraftfahrzeugs verwendet wird. Durch das Übermitteln der Ladeinformation an die Navigationseinrichtung des weiteren Kraftfahrzeugs wird es einem Fahrer des weiteren Kraftfahrzeugs ermöglicht, auf den Entladungszustand der Traktionsbatterie des die Ladeinformation übermittelnden Kraftfahrzeugs zu reagieren. Es ist beispielsweise möglich, dass bei einer Ladeinformation, welche die Positionsdaten des Kraftfahrzeugs umfasst, die Position des Kraftfahrzeugs in der Navigationseinrichtung des weiteren Kraftfahrzeugs angezeigt wird. Wenn die Ladeinformation keine Positionsdaten des Kraftfahrzeugs umfasst, so ist es möglich, dass die Navigationseinrichtung des weiteren Kraftfahrzeuges die Positionsdaten des Kraftfahrzeuges über die Datenkommunikationsverbindung bei der Kommunikationseinrichtung des Kraftfahrzeuges anfordert. Wenn bekannt ist, an welcher Position sich das entladene Kraftfahrzeug befindet, so kann der Fahrer des weiteren Kraftfahrzeugs die Position des Kraftfahrzeuges ansteuern um zu helfen.

Für die Positionsdaten des Kraftfahrzuges kann erfindungsgemäß vorgesehen sein, dass sie auf einer Anzeigeeinrichtung der Navigationseinrichtung dargestellt werden und/oder dass eine Route von der Position des weiteren Kraftfahrzeugs zu dem Kraftfahrzeug durch die Navigationseinrichtung ermittelt wird. Auf diese Weise kann der Fahrer des weiteren Kraftfahrzeugs erkennen, wo sich das entladene Kraftfahrzeug befindet und auf welchem Weg das weitere Kraftfahrzeug zu dem Kraftfahrzeug gelangen kann. Die Positionsdaten können dabei weiterhin Informationen umfassen, ob sich das Kraftfahrzeug an der angegebenen Position beispielsweise auf einem Pannenstreifen befindet oder auf welchem Parkplatz es geparkt ist, so dass das Kraftfahrzeug des weiteren Kraftfahrzeugs bei Erreichen der Position des Kraftfahrzeuges leicht identifiziert werden kann. Es ist auch denkbar, dass zusätzlich weitere Informationen übermittelt werden, welche es erleichtern das Kraftfahrzeug zu identifizieren, wie beispielsweise eine Modellbezeichnung und/oder eine Lackfarbe des Kraftfahrzeugs.

Erfindungsgemäß kann vorgesehen sein, dass das weitere Kraftfahrzeug einen Energiespeicher zur Speicherung von elektrischer Energie, eine Ladebuchse sowie eine Ladeelektronik umfasst, wobei die Ladeelektronik zur Durchführung eines Ladevorgangs ausgebildet ist, bei dem in dem Energiespeicher gespeicherte Energie an eine Traktionsbatterie eines an die Ladebuchse angeschlossenen Kraftfahrzeugs abgegeben wird. Das weitere Kraftfahrzeug kann dazu beispielsweise an der Position des Kraftfahrzeugs hinter oder neben dem Kraftfahrzeug abgestellt werden. Anschließend kann das Kraftfahrzeug mit der Ladebuchse des weiteren Kraftfahrzeugs verbunden werden. Dadurch, dass die Ladeelektronik des weiteren Kraftfahrzeugs zur Durchführung eines Ladevorgangs ausgebildet ist, kann der Traktionsbatterie des Kraftfahrzeuges elektrische Energie aus dem Energiespeicher des weiteren Kraftfahrzeuges zugeführt werden. Auf diese Weise kann die entladene Traktionsbatterie des Kraftfahrzeugs geladen werden.

Bei dem Energiespeicher des weiteren Kraftfahrzeuges kann es sich um einen Traktionsenergiespeicher des weiteren Kraftfahrzeugs handeln oder um einen Energiespeicher, dessen gespeicherte Energie nicht für den Fahrbetrieb des weiteren Kraftfahrzeuges verwendet wird, sondern von dem weiteren Kraftfahrzeug zu dem Zweck mitgeführt wird, die Traktionsbatterien von liegengebliebenen Kraftfahrzeugen oder von Kraftfahrzeugen, welche die nächstliegende Ladesäule nicht mehr erreichen können, zu laden. Dazu kann es sich bei dem weiteren Kraftfahrzeug beispielsweise um ein Pannenhilfsfahrzeug eines Pannendienstes oder Ähnlichem handeln.

Weiterhin kann erfindungsgemäß vorgesehen sein, dass durch die Ladeelektronik des weiteren Kraftfahrzeugs ein Energiemengengrenzwert bestimmt wird, wobei in dem Ladevorgang eine maximale Energiemenge entsprechend dem Energiemengengrenzwert an das Kraftfahrzeug übertragen wird. Die Ladeelektronik kann dabei automatisch einen Energiemengengrenzwert bestimmen oder ihn entsprechend einer Vorgabe des Fahrers des weiteren Kraftfahrzeuges auslegen.

Der Energiemengengrenzwert kann dabei erfindungsgemäß diejenige Energiemenge beschreiben, welche das Kraftfahrzeug benötigt, um die nächstliegende Ladestation zu erreichen. Dabei kann zur Bestimmung des Energiemengengrenzwertes die von der Position des Kraftfahrzeuges zur nächstgelegenen Ladestation zurückzulegende Strecke berücksichtigt werden. Alternativ dazu kann als Energiemengengrenzwert auch eine Energiemenge herangezogen werden, welche es dem Kraftfahrzeug ermöglicht, eine festgelegte Strecke zu fahren. Dabei kann für die festgelegte Strecke ein Wert herangezogen werden, welcher es gemeinhin ermöglicht, eine Ladestation zu erreichen, beispielsweise 20 km, 50 km oder 100 km.

Erfindungsgemäß kann vorgesehen sein, dass ein Traktionsenergiespeicher des weiteren Kraftfahrzeugs als Energiespeicher verwendet wird, wobei bei der Bestimmung des Energiemengengrenzwertes die Energiemenge berücksichtigt wird, welche das weitere Kraftfahrzeug benötigt, um die von der Position des Kraftfahrzeugs nächstliegende Ladestation zu erreichen. Dadurch wird verhindert, dass aus dem Traktionsenergiespeicher des weiteren Kraftfahrzeuges eine derartige Energiemenge an das Kraftfahrzeug übertragen wird, dass das weitere Kraftfahrzeug nicht mehr in der Lage ist, die nächstliegende Ladestation zu erreichen. Durch Berücksichtigung der Energiemenge, welches das weitere Kraftfahrzeug benötigt, um die nächstgelegene Ladestation zu erreichen, wird sichergestellt, dass nur so viel Energie an die Traktionsbatterie des Kraftfahrzeugs übertragen wird, dass auch das weitere Kraftfahrzeug in der Lage bleibt, zumindest die nächstliegende Ladestation erreichen zu können.

Erfindungsgemäß kann vorgesehen sein, dass das weitere Kraftfahrzeug dazu ausgebildet ist, eine während des Ladevorgangs übertragene Energiemenge zu bestimmen. Insbesondere kann vorgesehen sein, dass die Energiemenge über eine Anzeigeeinrichtung des weiteren Kraftfahrzeugs dargestellt werden kann. Auf diese Weise weiß der Fahrer des weiteren Kraftfahrzeuges, welche Energiemenge von dem Energiespeicher des weiteren Kraftfahrzeuges an die Traktionsbatterie des Kraftfahrzeuges übertragen wurde. Dies kann beispielsweise zu Abrechnungszwecken geschehen, so dass ein Entgelt für die zur Verfügung gestellte Energie bestimmt werden kann. Bei einem als Pannenhilfsfahrzeug ausgebildeten weiteren Kraftfahrzeuges kann dies beispielsweise zu einem vorgegebenen Gebührensatz erfolgen, wohingegen bei einem Privatfahrzeug als weiteres Fahrzeug ein Entgelt für die zur Verfügung gestellte Energiemenge zwischen den Fahrern der jeweiligen Fahrzeuge ausgemacht werden kann.

Zum Anschluss des Kraftfahrzeugs an die Ladebuchse des weiteren Kraftfahrzeuges kann erfindungsgemäß vorgesehen sein, dass ein Ladekabel verwendet wird, wobei über das Ladekabel eine Kommunikationsverbindung zwischen dem Kraftfahrzeug und dem weiteren Kraftfahrzeug zur Übertragung wenigstens einer Ladezustandsinformation betrieben wird. Die Ladezustandsinformation kann dabei Informationen über die Traktionsbatterie und/oder den Energiespeicher enthalten und ermöglicht beispielsweise die Kommunikation von Batteriemanagementsystemen und Ladeelektronik von Kraftfahrzeug und weiterem Kraftfahrzeug. Die Ladezustandsinformation kann dabei beispielsweise Informationen über den Ladestand der Traktionsbatterie enthalten und/oder weitere, den Ladevorgang beschreibende Informationen wie die Temperatur der Traktionsbatterie und/oder eine maximale Ladestromstärke enthalten. Auch kann die Ladezustandsinformation Informationen über das Kraftfahrzeug beinhalten, welche beispielsweise angeben, wie viel elektrische Energie für eine vorgegebene Strecke zur nächstliegenden Ladestation benötigt wird.

Für ein erfindungsgemäßes Kraftfahrzeug ist vorgesehen, dass es zur Durchführung eines erfindungsgemäßen Verfahrens ausgebildet ist. Dazu kann vorgesehen sein, dass das Kraftfahrzeug zum Übermitteln der Ladeinformation ausgebildet ist und/oder dass das Kraftfahrzeug zum Empfang der Ladeinformation und zur Abgabe von in einem Energiespeicher gespeicherter Energie über die Ladedose ausgebildet ist. Bevorzugt ist das erfindungsgemäße Kraftfahrzeug sowohl zum Übermitteln der Ladeinformation als auch zu deren Empfang sowie zur Abgabe von in einem Energiespeicher gespeicherter Energie ausgebildet. Auf diese Weise ist das Kraftfahrzeug in der Lage, über das erfindungsgemäße Verfahren bei einem Entladungszustand der Traktionsbatterie über die Ladeinformation Hilfe anzufordern und bei Empfang einer Ladeinformation sowie durch die Möglichkeit aus einem Energiespeicher gespeicherte Energie abzugeben, auch anderen Kraftfahrzeugen, welche entladen beziehungsweise liegengeblieben sind, zu helfen.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Seitenansicht eines erfindungsgemäßen Kraftfahrzeugs, sowie
- Fig. 2: eine schematische Darstellung von zwei erfindungsgemäßen Kraftfahrzeugen während eines Ladevorgangs.

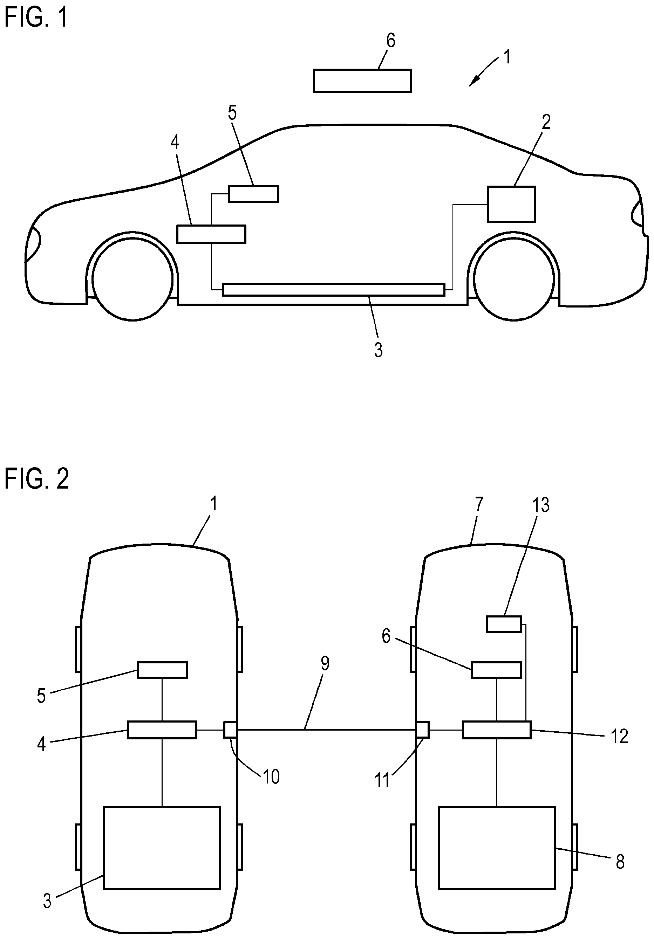

In Fig. 1 ist ein erfindungsgemäßes Kraftfahrzeug 1 dargestellt. Das Kraftfahrzeug 1 umfasst einen elektrischen Traktionsmotor 2 sowie eine Traktionsbatterie 3, welche die für den Betrieb des elektrischen Traktionsmotors 2 notwendige elektrische Energie speichert. Bei der Traktionsbatterie 2 kann es sich dabei um eine Batterie aus mehreren Batteriezellen oder um einen aus mehreren Kondensatoren gebildeten Energiespeicher handeln. Weiterhin umfasst das Kraftfahrzeug 1 eine Ladeelektronik 4 sowie eine Kommunikationseinrichtung 5. Wenn ein Entladezustand des Kraftfahrzeugs 1 vorliegt, also wenn ein Ladestand der in der Traktionsbatterie 3 gespeicherten elektrischen Energie nicht ausreichend ist, um den Traktionsmotor 2 zu betreiben und/oder wenn der Ladestand der in der Traktionsbatterie 3 gespeicherten elektrischen Energie nicht ausreichend ist, um die zur Position des Kraftfahrzeuges 1 nächstliegende Ladestation zu erreichen, so wird durch die Kommunikationseinrichtung 5 über eine Datenkommunikationsverbindung eine Ladeinformation an wenigstens eine fahrzeugexterne Datenempfangseinrichtung 6 übermittelt. Die fahrzeugexterne Datenempfangseinrichtung 6 kann dabei ein Computer oder eine Recheneinrichtung sein, welcher oder welche mit der Datenkommunikationsverbindung verbunden ist. Insbesondere kann die fahrzeugexterne Datenempfangseinrichtung 6, wie in Fig. 2 dargestellt, Teil eines weiteren Kraftfahrzeuges 7 sein.

Der Ladestand der Traktionsbatterie 3 kann beispielsweise von einem Steuergerät erfasst und ausgewertet werden, wobei das Steuergerät beispielsweise Bestandteil der Ladeelektronik 4 des Kraftfahrzeuges 1 sein kann. Die Kommunikationseinrichtung 5 des Kraftfahrzeuges 1 kann beispielsweise Teil einer Navigationseinrichtung sein, in der beispielsweise die Positionsdaten von verschiedenen Ladestationen hinterlegt sind, so dass ermittelt werden kann, ob der Ladestand der Traktionsbatterie 3 ausreichend ist, um die zur Position des Kraftfahrzeugs nächstliegende Ladestation, das heißt die Ladestation, zu der das Kraftfahrzeug 1 die geringste Strecke zurücklegen muss, erreicht werden kann. Die von der Kommunikationseinrichtung 5 an die externe Datenempfangseinrichtung 6 übermittelte Ladeinformation kann weiterhin die Positionsdaten des Kraftfahrzeuges 1 umfassen, so dass von der externen Datenempfangseinrichtung 6 oder einem mit ihr verbundenen Gerät die Position des Kraftfahrzeuges 1 angezeigt und/oder verarbeitet werden kann.

Die externe Datenempfangseinrichtung 6 kann beispielsweise eine Navigationseinrichtung des weiteren Kraftfahrzeuges 7 sein oder sie kann mit einer Navigationseinrichtung des weiteren Kraftfahrzeugs 7 verbunden sein. Dies ermöglicht es, die Position des entladenen Kraftfahrzeuges 1 auf einer Anzeigeeinrichtung des weiteren Kraftfahrzeuges 7 anzuzeigen, so dass ein Fahrer des weiteren Kraftfahrzeuges 7 dem entladenen Kraftfahrzeug 1 zur Hilfe kommen kann, indem er sich mit dem weiteren Kraftfahrzeug 7 zur Position des Kraftfahrzeuges 1 begibt. Bei dem weiteren Kraftfahrzeug kann es sich beispielsweise um ein privates Kraftfahrzeug handeln oder um ein speziell für Pannenhilfe vorgesehenes Pannenhilfsfahrzeug eines Pannendienstes oder Ähnlichem. Um die Hilfe durch das weitere Kraftfahrzeug 7 zu vereinfachen, kann vorgesehen sein, dass die Positionsdaten des Kraftfahrzeuges auf einer Anzeigeeinrichtung der Navigationseinrichtung des weiteren Kraftfahrzeugs 7 dargestellt werden und/oder dass eine Route von der Position des weiteren Kraftfahrzeugs zu dem Kraftfahrzeug durch die Navigationseinrichtung ermittelt wird. Erreicht das weitere Kraftfahrzeug 7 die Position des Kraftfahrzeuges 1, so kann durch das weitere Kraftfahrzeug 7 die Traktionsbatterie 3 des entladenen Kraftfahrzeuges 1 wieder geladen werden.

Fig. 2 zeigt einen Ladevorgang, bei dem Energie aus einem Energiespeicher 8 des weiteren Kraftfahrzeugs 7 an das Kraftfahrzeug 1 übertragen wird. Das Kraftfahrzeug 1 und das weitere Kraftfahrzeug 7 sind dabei über ein Ladekabel 9 gekoppelt, welches mit einer Ladebuchse 10 des Kraftfahrzeugs 1 sowie mit einer Ladebuchse 11 des weiteren Kraftfahrzeugs 7 verbunden ist. Das weitere Kraftfahrzeug 7 umfasst eine Ladeelektronik 12, welche dazu ausgebildet ist, in dem Energiespeicher 8 des Kraftfahrzeugs 7 gespeicherte elektrische Energie über die Ladebuchse 11 an die Traktionsbatterie 3 des Kraftfahrzeuges 1 zu übertragen. Bei dem Energiespeicher 8 des weiteren Kraftfahrzeuges 7 kann es sich um einen Traktionsenergiespeicher des weiteren Kraftfahrzeuges 7 handeln oder um einen, beispielsweise in einem Pannenhilfsfahrzeug vorhandenen, zur Aufladung entladener Kraftfahrzeuge vorgesehenen Energiespeicher handeln. Durch die Ladeelektronik 12 des weiteren Kraftfahrzeuges 7 kann ein Energiemengengrenzwert bestimmt werden, welcher eine maximale Energiemenge beschreibt, welche in dem Ladevorgang an die Traktionsbatterie 3 des Kraftfahrzeuges 1 übertragen wird. Dieser Energiemengengrenzwert kann berücksichtigen, welche Energiemenge in der Traktionsbatterie 3 des Kraftfahrzeugs 1 vorhanden sein muss, damit das Kraftfahrzeug 1 die nächstgelegene Ladestation erreichen kann. Zusätzlich dazu kann berücksichtigt werden, welche Energiemenge das weitere Kraftfahrzeug 7 benötigt, um die von der aktuellen Position des Kraftfahrzeuges 1 nächstgelegene Ladestation zu erreichen. Dadurch wird vermieden, dass eine derartige Energiemenge von dem weiteren Kraftfahrzeug 7 an das Kraftfahrzeug 1 übertragen wird, welche es dem weiteren Kraftfahrzeug 7 unmöglich macht, die nächstgelegene Ladestation zu erreichen.

Über das Ladekabel 9 kann eine Kommunikationsverbindung zwischen dem Kraftfahrzeug 1 und dem weiteren Kraftfahrzeug 7 aufgebaut werden, welche es ermöglicht, Ladezustandsinformationen zu übertragen. Die Ladezustandsinformationen können beispielsweise beschreiben, welchen Ladestand die Traktionsbatterie 3 aktuell aufweist beziehungsweise weitere für den Ladevorgang benötigte Parameter, wie eine Temperatur der Traktionsbatterie 3 und/oder einen maximal möglichen Ladestrom, enthalten. Über die Kommunikationsverbindung werden die Ladezustandsinformationen an die Ladeelektronik 12 des weiteren Kraftfahrzeugs 7 übermittelt. Auch ist es möglich, dass zusätzliche Informationen wie beispielsweise der Energieverbrauch des Kraftfahrzeuges 1 und/oder eine zum Erreichen der nächstliegenden Ladestation benötigte Energiemenge über das Ladekabel 9 an die Ladeelektronik 12 des weiteren Kraftfahrzeuges 7 übermittelt werden.

Nach Abschluss der Energieübertragung, also wenn die Traktionsbatterie des Kraftfahrzeuges 1 einen Ladestand aufweist, welche es dem Kraftfahrzeug 1 ermöglicht, von der aktuellen Position wenigstens die nächstgelegene Ladestation zu erreichen, kann eine insgesamt vom Energiespeicher 8 an die Traktionsbatterie 3 übertragene Energiemenge auf einer Anzeigeeinrichtung 13 des weiteren Kraftfahrzeuges 7 angezeigt werden. Diese Gesamtenergiemenge kann zu Abrechnungszwecken bzw. zur Bestimmung eines Entgelts für die dem Kraftfahrzeug 1 vom weiteren Kraftfahrzeug 7 zur Verfügung gestellte Energie herangezogen werden.

## Patentansprüche

1. Verfahren zum Betrieb eines Kraftfahrzeugs (1), wobei das Kraftfahrzeug (1) einen elektrischen Traktionsmotor (2) und eine Traktionsbatterie (3) umfasst, wobei mittels einer Kommunikationseinrichtung (5) des Kraftfahrzeugs (1) bei Vorliegen eines Entladungszustands über eine Datenkommunikationsverbindung eine Ladeinformation an mehrere fahrzeugexterne Datenempfangseinrichtungen (6) übermittelt wird, wobei ein Entladungszustand vorliegt, wenn ein Ladestand der in der Traktionsbatterie (3) gespeicherten elektrischen Energie nicht ausreichend ist, um den Traktionsmotor (2) zu betreiben und/oder wenn ein Ladestand der in der Traktionsbatterie (3) gespeicherten elektrischen Energie nicht ausreichend ist, um die zur Position des Kraftfahrzeugs (1) nächstliegende Ladestation zu erreichen, wobei die Ladeinformation die Positionsdaten des Kraftfahrzeugs (1) umfasst, wobei als fahrzeugexterne Datenempfangseinrichtung (6) jeweils eine Navigationseinrichtung eines weiteren Kraftfahrzeugs (7) verwendet wird, wobei die Positionsdaten des Kraftfahrzeugs (1) auf einer Anzeigeeinrichtung (13) der Navigationseinrichtung dargestellt werden und/oder eine Route von der Position des weiteren Kraftfahrzeugs (7) zu dem Kraftfahrzeug (1) durch die Navigationseinrichtung ermittelt wird.

2. Verfahren nach Anspruch 1,
**dadurch gekennzeichnet,**
**dass** das weitere Kraftfahrzeug (7) einen Energiespeicher (8) zur Speicherung von elektrischer Energie, eine Ladebuchse (11) sowie eine Ladeelektronik (12) umfasst, wobei die Ladeelektronik (12) zur Durchführung eines Ladevorgangs ausgebildet ist, bei dem in dem Energiespeicher (8) gespeicherte Energie an eine Traktionsbatterie (3) eines an die Ladebuchse (11) angeschlossenen Kraftfahrzeugs (1) abgegeben wird.

3. Verfahren nach Anspruch 2,
**dadurch gekennzeichnet,**
**dass** durch die Ladeelektronik (12) des weiteren Kraftfahrzeugs (7) ein Energiemengengrenzwert bestimmt wird, wobei in dem Ladevorgang eine maximale Energiemenge entsprechend dem Energiemengengrenzwert an das Kraftfahrzeug (1) übertragen wird.

4. Verfahren nach Anspruch 3,
**dadurch gekennzeichnet,**
**dass** der Energiemengengrenzwert diejenige Energiemenge beschreibt, welche das Kraftfahrzeug (1) benötigt, um die nächstliegende Ladestation zu erreichen.

5. Verfahren nach Anspruch 3 oder 4,
**dadurch gekennzeichnet,**
**dass** ein Traktionsenergiespeicher des weiteren Kraftfahrzeugs (7) als Energiespeicher (8) verwendet wird, wobei bei der Bestimmung des Energiemengengrenzwertes die Energiemenge berücksichtigt wird, welche das weitere Kraftfahrzeug (7) benötigt, um die von der Position des Kraftfahrzeugs (1) nächstliegende Ladestation zu erreichen.

6. Verfahren nach einem der Ansprüche 2 bis 5,
**dadurch gekennzeichnet,**
**dass** das weitere Kraftfahrzeug (7) dazu ausgebildet ist, eine während des Ladevorgangs übertragene Energiemenge zu bestimmen.

7. Verfahren nach einem der Ansprüche 2 bis 6,
**dadurch gekennzeichnet,**
**dass** zum Anschluss des Kraftfahrzeug (1) an die Ladebuchse (11) des weiteren Kraftfahrzeugs (7) ein Ladekabel (9) verwendet wird, wobei über das Ladekabel (9) eine Kommunikationsverbindung zwischen dem Kraftfahrzeug (1) und dem weiteren Kraftfahrzeug (7) zur Übertragung wenigstens einer Ladezustandsinformation betrieben wird.

8. Kraftfahrzeug ausgebildet zur Durchführung eines Verfahrens nach einem der Ansprüche 1 bis 7, wobei das Kraftfahrzeug (7) einen elektrischen Traktionsmotor (2), eine Kommunikationseinrichtung (5) und eine Traktionsbatterie (3) umfasst,
**dadurch gekennzeichnet, dass** ein Verfahren nach einem der Ansprüche 1 bis 7 ausgeführt wird.

## Claims

1. Method for operating a motor vehicle (1), wherein the motor vehicle (1) includes an electrical traction motor (2) and a traction battery (3), wherein when a discharging state prevails, an item of charging information is transmitted by means of a communication device (5) of the motor vehicle (1) via a data communication connection to several data receiving devices (6) external to the vehicle, wherein a discharging state prevails if a charging state of the electrical energy stored in the traction battery (3) is not sufficient to operate the traction motor (2) and/or if a charging state of the electrical energy stored in the traction battery (3) is not sufficient to reach the charging station closest to the position of the motor vehicle (1), wherein the item of charging information includes the positional data of the motor vehicle (1), wherein as a data receiving device (6) external to the vehicle is used in each case a navigation device of a further motor vehicle (7), wherein the positional data of the motor vehicle (1) are displayed on a display device (13) of the navigation device and/or a route from the position of the further motor vehicle (7) to the motor vehicle (1) is determined by the navigation device.

2. Method according to claim 1,
**characterised in**
**that** the further motor vehicle (7) includes an energy storage (8) for storing electrical energy, a charging port (11) and a charging electronics (12), wherein the charging electronics (12) is configured to carry out a charging procedure in which energy stored in the energy storage (8) is outputted to a traction battery (3) of a motor vehicle (1) connected to the charging port (11).

3. Method according to claim 2,
**characterised in**
**that** by means of the charging electronics (12) of the further motor vehicle (7) and energy quantity threshold is determined, wherein in the charging procedure a maximum energy quantity is transmitted to the motor vehicle (1) which corresponds to the energy quantity threshold.

4. Method according to claim 3,
**characterised in**
**that** the energy quantity threshold describes that energy quantity which the motor vehicle (1) requires in order to reach the closest charging station.

5. Method according to claim 3 or 4,
**characterised in**
**that** a traction energy storage of the further motor vehicle (7) is used as an energy storage (8), wherein in the determination of the energy quantity threshold the energy quantity is taken into consideration which the further motor vehicle (7) requires in order to reach the charging station closest from the position of the motor vehicle (1).

6. Method according to any of claims 2 to 5,
**characterised in**
**that** the further motor vehicle (7) is configured to specify an energy quantity transferred during the charging procedure.

7. Method according to any of claims 2 to 6,
**characterised in**
**that** a charging cable (9) is used for connecting the motor vehicle (1) to the charging port (11) of the further motor vehicle (7), wherein via the charging cable (9) a communication connection is operated between the motor vehicle (1) and the further motor vehicle (7) for transmitting at least one item of charging state information.

8. Motor vehicle configured to carry out the method according to any of claims 1 to 7, wherein the motor vehicle (7) includes an electrical traction motor (2), a communication device (5) and a traction battery (3),
**characterised in that** a method is carried out according to any of claims 1 to 7.

## Revendications

1. Procédé de fonctionnement d'un véhicule automobile (1), dans lequel le véhicule automobile (1) comprend un moteur de traction électrique (2) et une batterie de traction (3), dans lequel une information de charge est transmise à plusieurs appareils de réception de données externes au véhicule (6) au moyen d'un appareil de communication (5) du véhicule automobile (1) en présence d'un état de décharge par le biais d'une liaison de communication de données, dans lequel il y a un état de décharge, lorsqu'un état de charge de l'énergie électrique accumulée dans la batterie de traction (3) n'est pas suffisant pour faire fonctionner le moteur de traction (2) et/ou lorsqu'un état de charge de l'énergie électrique accumulée dans la batterie de traction (3) n'est pas suffisant pour atteindre la station de recharge la plus proche de la position du véhicule automobile (1), dans lequel l'information de charge comprend les données de position du véhicule automobile (1), dans lequel respectivement un appareil de navigation d'un autre véhicule automobile (7) est utilisé en tant qu'appareil de réception de données externe au véhicule (6), dans lequel les données de position du véhicule automobile (1) sont représentées sur un appareil d'affichage (13) de l'appareil de navigation et/ou un itinéraire de la position de l'autre véhicule automobile (7) au véhicule automobile (1) est déterminé par l'appareil de navigation.

2. Procédé selon la revendication 1,
**caractérisé en ce**
**que** l'autre véhicule automobile (7) comprend un accumulateur d'énergie (8) pour l'accumulation d'énergie électrique, une prise de recharge (11) ainsi qu'une électronique de recharge (12), dans lequel l'électronique de recharge (12) est réalisée pour la réalisation d'une opération de recharge, lors de laquelle l'énergie accumulée dans l'accumulateur d'énergie (8) est délivrée à une batterie de traction (3) d'un véhicule automobile (1) raccordé à la prise de recharge (11).

3. Procédé selon la revendication 2,
**caractérisé en ce**
**qu'**une valeur limite de quantité d'énergie est déterminée par l'électronique de recharge (12) de l'autre véhicule automobile (7), dans lequel dans l'opération de recharge une quantité d'énergie maximum est transférée au véhicule automobile (1) en fonction de la valeur limite de quantité d'énergie.

4. Procédé selon la revendication 3,
**caractérisé en ce**
**que** la valeur limite de quantité d'énergie décrit la quantité d'énergie, dont le véhicule automobile (1) a besoin pour atteindre la station de recharge la plus proche.

5. Procédé selon la revendication 3 ou 4,
**caractérisé en ce**
**qu'**un accumulateur d'énergie de traction de l'autre véhicule automobile (7) est utilisé en tant qu'accumulateur d'énergie (8), dans lequel lors de la détermination de la valeur limite de quantité d'énergie la quantité d'énergie, dont l'autre véhicule automobile (7) a besoin pour atteindre la station de recharge la plus proche de la position du véhicule automobile (1), est prise en compte.

6. Procédé selon l'une quelconque des revendications 2 à 5,
**caractérisé en ce**
**que** l'autre véhicule automobile (7) est réalisé pour déterminer une quantité d'énergie transférée pendant l'opération de recharge.

7. Procédé selon l'une quelconque des revendications 2 à 6,
**caractérisé en ce**
**qu'**un câble de recharge (9) est utilisé pour le raccordement du véhicule automobile (1) à la prise de recharge (11) de l'autre véhicule automobile (7), dans lequel une liaison de communication entre le véhicule automobile (1) et l'autre véhicule automobile (7) pour la transmission d'au moins une information d'état de charge fonctionne par le biais du câble de recharge (9).

8. Véhicule automobile réalisé pour la réalisation d'un procédé selon l'une quelconque des revendications 1 à 7, dans lequel le véhicule automobile (7) comprend un moteur de traction électrique (2), un appareil de communication (5) et une batterie de traction (3),
**caractérisé en ce qu'**un procédé selon l'une quelconque des revendications 1 à 7 est réalisé.
